**Europäisches Patentamt**

**European Patent Office**

**Office européen des brevets**

(19)

(11) Veröffentlichungsnummer: **0 249 642**
**A1**

(12) **EUROPÄISCHE PATENTANMELDUNG**

veröffentlicht nach Art. 158 Abs. 3 EPÜ

(21) Anmeldenummer: **86907020.1**

(22) Anmeldetag: **04.11.86**

Daten der zugrundeliegenden internationalen Anmeldung:

(86) Internationale Anmeldenummer:
**PCT/SU 86/00111**

(87) Internationale Veröffentlichungsnummer:
**WO 87/02786 (07.05.87 87/10)**

(51) Int. Cl.⁴: **G 02 B 26/10**

(30) Priorität: **04.11.85 SU 3972971**

(43) Veröffentlichungstag der Anmeldung: **23.12.87**
**Patentblatt 87/52**

(84) Benannte Vertragsstaaten: **CH DE FR GB IT LI**

(71) Anmelder: **INSTITUT MASHINOVEDENIA IMENI A.A.**
**BLAGONRAVOVA AKADEMII NAUK SSSR, ul.**
**Griboedova 4, Moscow, 101830 (SU)**
Anmelder: **NAUCHNO-ISSLEDOVATELSKY TSENTR PO**
**TEKHNOLOGICHESKIM LAZERAM AKADEMII NAUK**
**SSSR, ul. Pionerskaya 2, Moskovskaya obl.**
**Troitsk 142092 (SU)**

(72) Erfinder: **BABITSKY, Vladimir Iliich, Slavyansky**
**bulvar, 5-1-72, Moscow, 121352 (SU)**
Erfinder: **GERTS, Mikhail Evgenievich,**
**Novocheremushkinskaya ul., 40-1-33,**
**Moscow, 117418 (SU)**
Erfinder: **IVANOV, Jury Arkadievich, ul. Suvorova, 25-35,**
**Ivanovo, 153012 (SU)**
Erfinder: **MAIOROV, Vladimir Sergeevich, Dokuchaev,**
**per., 15-42, Moscow, 107053 (SU)**
Erfinder: **MAKAROV, Nikolai Sergeevich, ul.**
**Molodtsova, 15-2-166, Moscow, 129081 (SU)**
Erfinder: **TRESVYATSKY, Alexandr Nikolaevich, pr.**
**Mira, 85-44, Moscow, 129085 (SU)**

(74) Vertreter: **Patentanwälte Beetz sen. - Beetz jun. Timpe -**
**Siegfried - Schmitt-Fumian, Steinsdorfstrasse 10,**
**D-8000 München 22 (DE)**

(54) **ABTASTANORDNUNG FÜR LASERTECHNOLOGIEANLAGEN.**

(57) Der Scanner für technologische Laseranlagen enthält ein Gehäuse (1), in dem ein Abtastelement (4) verschiebbar angeordnet ist, ein mit dem Gehäuse (1) mechanisch verbundenes Mittel (12) zur Anregung mechanischer Schwingungen und einen Meßwandler (19), der die mechanischen Schwingungen des Abtastelementes (4) aufnimmt. Mit dem Gehäuse (1) und dem Abtastelement (4) sind mechanisch zumindest zwei Schlagpaare (5) verbunden. An den Meßwandler (19) ist eine Phasenschiebereinheit (21) angeschlossen, an welche eine Sättigungseinheit (24) gelegt ist. An das Mittel (12) zur Anregung mechanischer Schwingungen des Abtastelementes (4) und an die Sättigungseinheit (24) ist ein Leistungsverstärker (27) angeschlossen.

## SCANNER FÜR TECHNOLOGISCHE LASERANLAGEN

### Anwendungsbereich

Die Erfindung bezieht sich auf Scanner und betrifft insbesondere Scanner für technologische Laseranlagen.

### Vorheriger Stand der Technik

Die moderne Entwicklung der Maschinenbauindustrie stellt immer höhere Forderungen an die Verschleissfestigkeit und Lebensdauer der Maschinenteile. Gegenwärtig ist eine der aussichtsreichsten Methode zur Verfestigung von Teilen und Erhöhung deren Verschleissfestigkeit die Laserwärmebehandlung deren Oberfläche. Die zu diesem Zweck in den technologischen Laseranlagen verwendeten Abtastsysteme dienen als hauptsächliche Laserstrahlungssteuereinrichtungen, die die Güte und Produktivität der Laserbehandlung sichern.

Bekannt ist ein Scanner für technologische Laseranlagen (FR-Patentanmeldung Nr. 8509169), der ein Gehäuse, in dem ein Abtastelement verschiebbar angeordnet ist, ein Mittel zur Anregung mechanischer Schwingungen des Abtastelementes, das mechanisch mit dem Gehäuse verbunden ist, und zumindest zwei Schlagpaare enthält, wobei jedes Schlagpaar zwei Elemente hat, das eine von welchen an dem Abtastelement und das andere im Gehäuse derart befestigt sind, dass sie untereinander bei der Verstellung des Abtastelementes zusammenwirken können.

Jedoch wird bei diesem Scanner zur Verminderung des Einflüsses von Schwankungen der Parameter des Mittels zur Anregung mechanischer Schwingungen und des Abtastelementes auf den Arbeitsbetrieb dieser bei einer herabgeminderten Abtastgeschwindigkeit realisiert. Bei Vergrösserung der Geschwindigkeit ist ein Abriss des Schlagbetriebes auf einen schlaglosen Betrieb mit geringer Abtastgeschwindigkeit und -amplitude möglich, was zur Störung des Scannerbetriebs führen kann.

Darüber hinaus führt bei diesen Scanner die bewusste Verminderung der Abtastgeschwindigkeit zu einer Vermin-

- 2 -

derung der Aufprallgeschwindigkeit der Elemente der Schlagpaare, was zu einer Abweichung des Abtastgesetzes von dem optimalen (sägezahnförmigen) Abtastgesetz führt und was wiederum eine Senkung der Abtastgenauigkeit verursacht.

Offenbarung der Erfindung

Der Erfindung liegt die Aufgabe zugrunde, einen Scanner für technologische Laseranlagen zu schaffen, der solche zusätzliche Einheiten hat, die es gestatten, die Aufprallgeschwindigkeit der Elemente in den Schlagpaaren ohne Vergrösserung der Leistung des Mittels zur Anregung mechanischer Schwingungen des Abtastelementes zu erhöhen sowie die Abtastgenauigkeit zu steigern.

Dies wird dadurch erreicht, dass der Scanner für technologische Laseranlagen, der ein Gehäuse, in dem ein Abtastelement verschiebbar angeordnet ist, ein mit dem Gehäuse mechanisch verbundenes Mittel zur Anregung mechanischer Schwingungen des Abtastelementes, zumindest zwei Schlagpaare, jedes von welchen zwei Elemente hat, von denen das eine an dem Abtastelement und das andere im Gehäuse derart befestigt sind, dass sie untereinander bei Verstellung des Abtastelementes zusammenwirken können, enthält, zusätzlich einen Messwandler, der die mechanischen Schwingungen des Abtastelementes aufnimmt, eine Phasenverschiebereinheit, deren Eingang an den Messwandler angeschlossen ist, eine Sättigungseinheit, deren Eingang an den Ausgang der Phasenschiebereinheit gelegt ist, und einen Leistungsverstärker, dessen Eingang an die Sättigungseinheit dessen Ausgang an das Mittel zur Anregung mechanischer Schwingungen des Abtastelementes angeschlossen ist, enthält.

Es ist zweckmässig, dass der Scanner für technologische Laseranlagen einen an die Phasenschiebereinheit angeschlossenen Frequenzmesser und eine mit diesem verbundene Sättigungspegelsteuereinheit zusätzlich enthält, während die Sättigungseinheit zumindest zwei Steuerein-

- 3 -

gänge hat, an welche die entsprechenden Ausgänge der Sättigungspegelsteuereinheit angeschlossen sind.

Es ist erwünscht, dass bei dem Scanner für technologische Laseranlagen die Sättigungspegelsteuereinheit eine Divisionseinheit, bei welcher der eine Eingang als Eingang der Sättigungspegelsteuereinheit dient und an den anderen Eingang eine Gleichspannungsquelle angeschlossen ist, einen umkehrenden und einen nichtumkehrenden Gleichspannungsverstärker, deren Eingänge an den Ausgang der Divisionseinheit gelegt sind, während der Ausgang jedes von diesen Verstärkern als entsprechender Ausgang der Sättigungspegelsteuereinheit dient, enthält.

Es ist ratsam, dass der Scanner für technologische Laseranlagen zusätzlich einen Generator periodischer Signale enthält, dessen Ausgang mit dem Ausgang der Sättigungseinheit zusammengeschaltet und an den Eingang des Leistungsverstärkers angeschlossen ist.

Auch ist es zweckmässig, dass bei dem Scanner für technologische Laseranlagen die Phasenschiebereinheit einen Phasendreher und/oder ein Korrekturglied und/oder ein Filter in angegebener Folge in Kombination oder einzeln enthält.

Auch ist es erwünscht, dass bei dem Scanner für technologische Anlagen die Phasenschiebereinheit eine Reihenschaltung aus einem Phasendreher und einem Korrekturglied enthält.

Weiterhin ist es ratsam, dass bei dem Scanner für technologische Anlagen die Phasenschiebereinheit einen Phasendreher und ein mit diesem in Reihe geschaltetes Filter enthält.

Darüber hinaus ist es zweckmässig, dass bei dem Scanner für technologische Laseranlagen die Phasenschiebereinheit eine Reihenschaltung aus einem Korrekturglied und einem Filter enthält.

Auch ist es erwünscht, dass bei dem Scanner für technologische Laseranlagen die Phasenschiebereinheit

- 4 -

einen Phasendreher, ein Korrekturgleid und ein Filter, die in Reihe geschaltet sind, enthält.

Darüber hinaus ist es ratsam, dass bei dem Scanner für technologische Laseranlagen die Phasenschiebereinheit zumindest zwei Steuereingänge zusätzlich hat und dass der Scanner zusätzlich ein Mittel zur Regelung der Phasenverschiebung enthält, das Ausgänge nach der Zahl der Steuereingänge der Phasenschiebereinheit hat, jeder von welchen an den entsprechenden Steuereingang der Phasenschiebereinheit angeschlossen ist.

Es ist möglich, dass beim Scanner für technologische Laseranlagen das Korrekturglied vier Steuereingänge hat, jeder von welchen an den entsprechenden Ausgang des Mittels zur Regelung der Phasenverschiebung angeschlossen ist.

Darüber hinaus ist es möglich, dass bei dem Scanner für technologische Laseranlagen das Filter vier Steuereingänge hat, jeder von welchen an d . entsprechenden Ausgang des Mittels zur Regelung der Phasenverschiebung gelegt ist.

Es ist vorteilhaft, dass bei dem Scanner für technologische Laseranlagen als Mittel zur Regelung der Phasenverschiebung ein Mikroprozessor benutzt wird.

Die vorliegende Erfindung gestattet es, den Abtastbetrieb auf höheren Frequenzen zu realisieren, was die Abtastgeschwindigkeit erhöht.

Darüber hinaus gestattet die Erfindung es, den Abtastbetrieb bei optimalem (sägezahnförmigem) Abtastgesetz zu realisieren, was zur Erhöhung der Abtastgenauigkeit führt.

Auch gestattet die vorliegende Erfindung einen stabilen Selbstschwingungsbetrieb zu realisieren, was seine Störsicherheit erhöht und dadurch eine Störung des Scannerbetriebs ausschliesst, was ihrerseits die Betriebssicherheit des Scanners erhöht.

Darüber hinaus gestattet es die vorliegende Erfin-

- 5 -

dung, den Scanner automatisch auf den optimalen Abtastbetrieb einzustellen.

Kurzbeschreibung der Zeichnungen Nachstehend soll die Erfindung durch die Beschreibung von konkreten Ausführungsbeispielen unter Bezugnahme auf die beiliegenden Zeichnungen erläutert werden.
Es zeigen:

Fig. 1 - Funktionsschema eines erfindungsgemässen
Scanners für technologische Laseranlagen;

Fig. 2 - Funktionsschema des Scanners für technologische Laseranlagen nach Fig. 1 mit einem Mittel zur Regelung der Phasenverschiebung;

Fig. 3 - Funktionsschema des erfindungsgemässen
Scanners für technologische Laseranlagen nach Fig. 2
mit einem Frequenzmesser;

Fig. 4 - Funktionsschema des erfindungsgemässen
Scanners für technologische Laseranlagen nach Fig. 2 mit
einem Generator periodischer Signale;

Fig. 5 - Funktionsschema des Phasendrehers;

Fig. 6 - Funktionsschema des Korrekturgliedes;

Fig. 7 - Funktionsschema des Filters;

Fig. 8 - Funktionsschema der Phasenschiebereinheit
mit Phasendreher und Korrekturglied;

Fig. 9 - Funktionsschema der Phasenschiebereinheit
mit Phasendreher und Filter;

Fig. 10 - Funktionsschema der Phasenschiebereinheit
mit Korrekturglied und Filter;

Fig. 11 - Funktionsschema der Phasenschiebereinheit
mit Phasendreher, Korrekturglied und Filter;

Fig. 12 - Funktionsschema des Phasendrehers nach

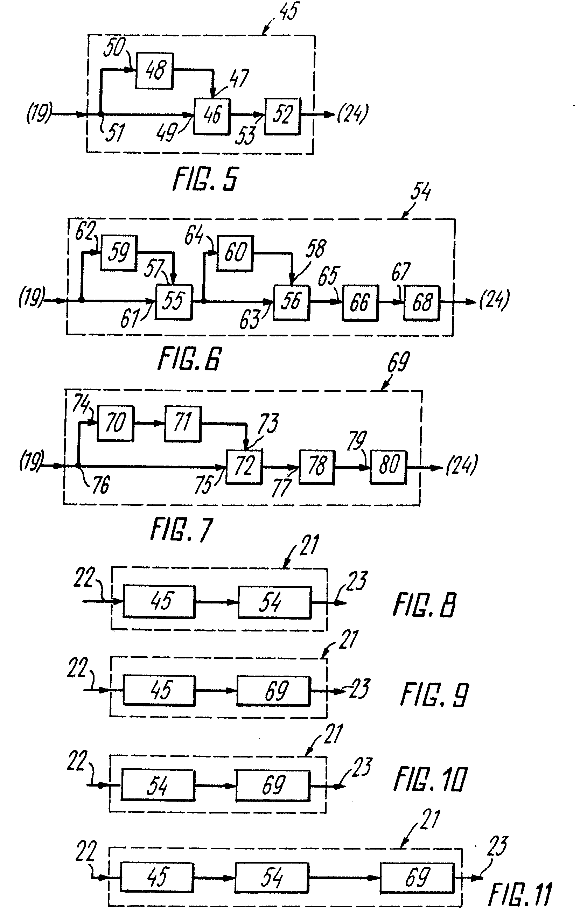

Fig. 5 mit Steuereingängen;

Fig. 13 - Funktionsschema des Korrekturgliedes nach
Fig. 6 mit Steuereingängen;

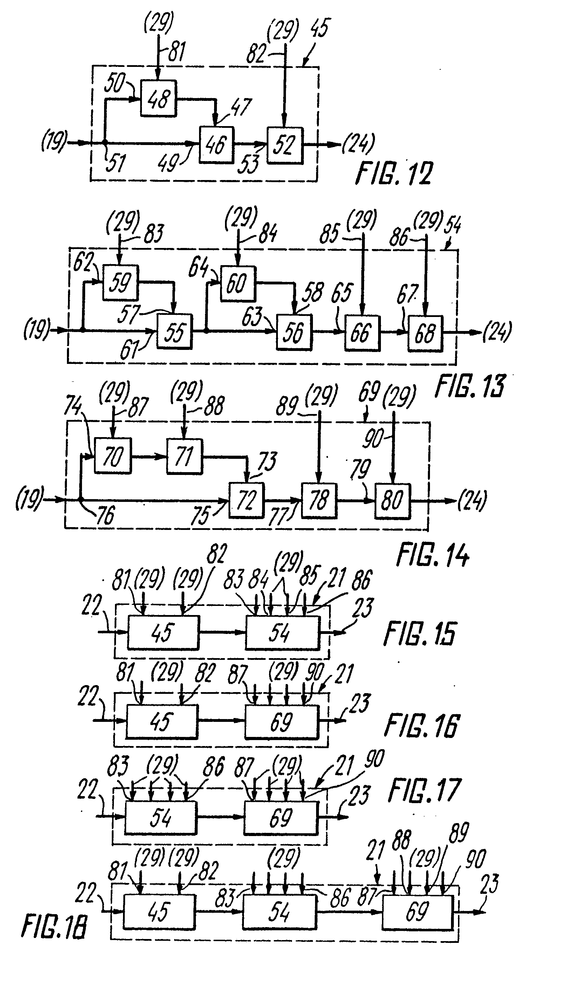

Fig. 14 - Funktionsschema des Filters nach Fig. 7
mit Steuereingängen;

Fig. 15 - Funktionsschema der Phasenschiebereinheit

- 6 -

nach Fig. 8 mit Steuereingängen;

Fig. 16 - Funktionsschema der Phasenschiebereinheit nach Fig. 9 mit Steuereingängen;

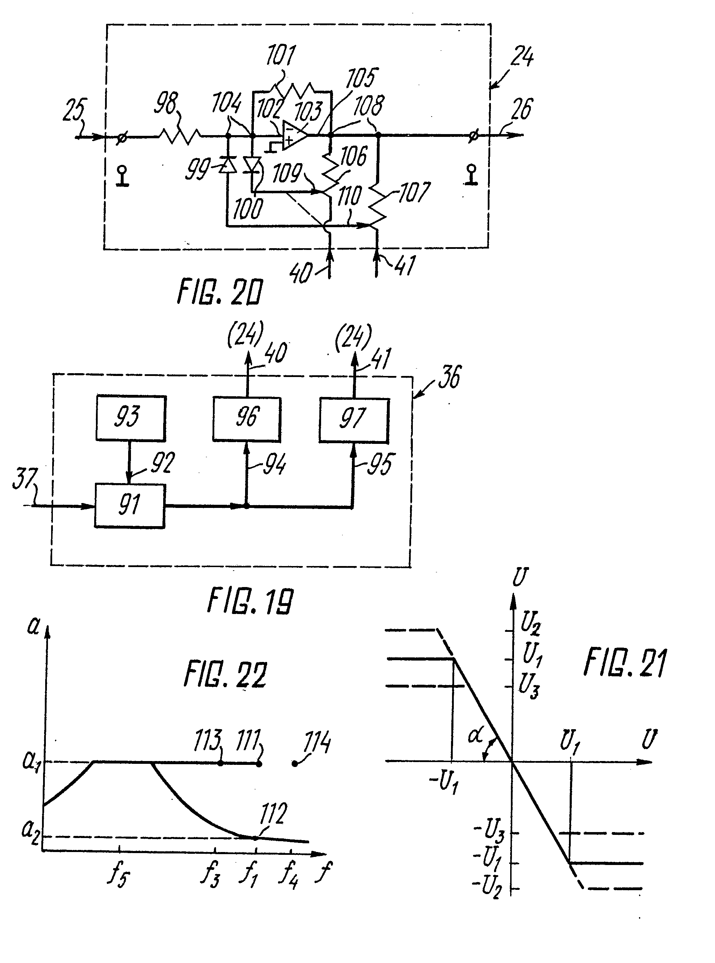

Fig. 17 - Funktionsschema der Phasenschiebereinheit nach Fig. 10 mit Steuereingängen;

Fig. 18 - Funktionsschema der Phasenschiebereinheit nach Fig. 11 mit Steuereingängen;

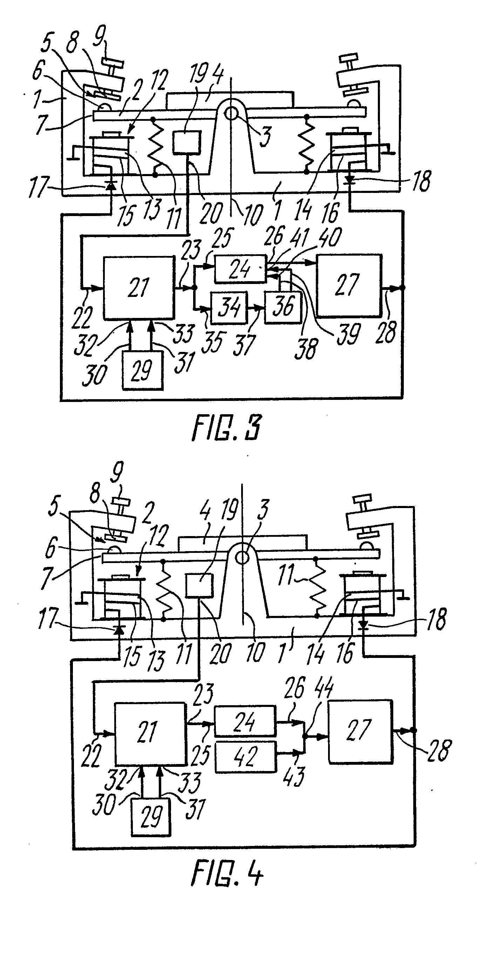

Fig. 19 - Funktionsschema der Einheit zur Regelung der Sättigungspegel nach Fig. 3;

Fig. 20 - Prinzipschaltbild der Sättigungseinheit;

Fig. 21 - Abhängigkeit der Ausgangsspannung von der Eingangsspannung der Sättigungseinheit;

Fig. 22 - Amplitudenfrequenzkennlinie des Scanners für technologische Laseranlagen.

Beste Ausführungsform der Erfindung

Als Beispiel sei ein Scanner für technologische Laseranlagen mit eleltromechanischer Anregung von Schwingungen beschrieben.

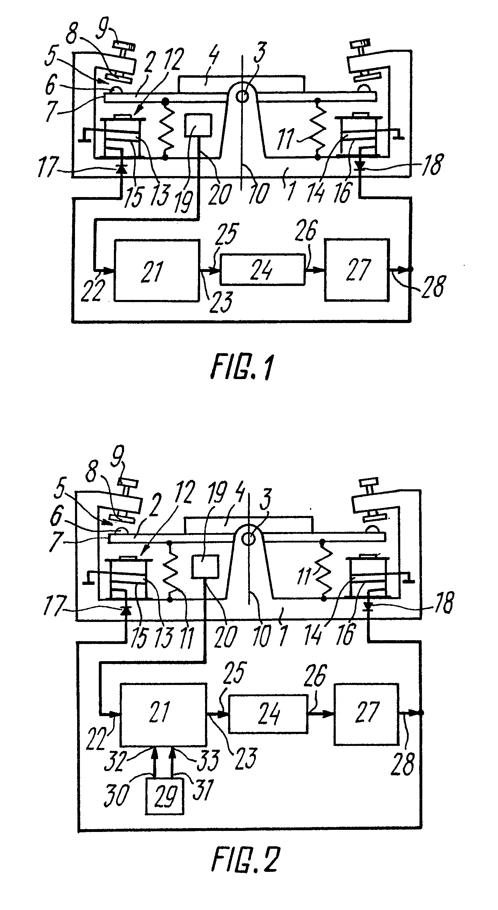

Der Scanner für technologische Laseranlagen enthält ein Gehäuse 1 (Fig. 1), in dem auf einer Achse 3 ein Schwinghebel 2 angeordnet ist, der um diese Achse 3 verschiebbar ist. Der Schwinghebel 2 trägt ein als Spiegel 4 ausgebildetes Abtastelement. Symmetrisch zur Achse 3 des Schwinghebels 2 sind identische Schlagpaare 5 angeordnet. Jedes Schlagpaar 5 besteht aus einem ersten Element 6, das an dem entsprechenden Arm des Schwinghebels 2 in unmittelbarer Nähe von seiner Stirnfläche 7 angeordnet ist, und einem zweiten Element 8, das in dem Gehäuse 1 derart angeordnet ist, dass es mit dem Element 6 bei Verstellung des Spiegels 4 zusammenwirken kann und mittels der Schraube 9 reguliert werden kann. Symmetrisch zur geometrischen Achse 10 des Scanners sind unter dem Schwinghebel 2 elastische Elemente in Form von Federn 11 angeordnet, die den Schwinghebel 2 mit dem Gehäuse 1 verbinden. Unter dem Schwinghebel 2 ist im Gehäuse 1 ein Mittel 12 zur Anregung von mechanischen Schwingungen des Abtastelementes angeordnet, das zwei identische Elektromagnete 13, 14 mit Wicklungen 15, 16 enthält. An die Wicklung 15 ist eine Steuerdiode 17 katodenseitig und an die Wicklung 16 eine Steuerdiode 18 anodenseitig angeschlossen. Unter dem Schwinghebel 2 ist ein beispielsweise als weitgehend bekannter fotoelektrischer Verstellungsgeber 19 ausgeführter Meßwandler angeordnet. An den Ausgang 20 des Gebers 19 ist eine Phasenschiebereinheit 21 mit ihrem Eingang 22 gelegt, an dessen Ausgang 23 eine Sättigungseinheit 24 mit ihrem Eingang 25 angeschlossen ist (W.A. Besekersky, E.P.Popov "Theorie für automatische Regelungssysteme", 1972, Moskau, Verlag "Nauka", S. 548). An den Ausgang 26 der Einheit 24 ist ein Leistungsverstärker 27 angeschlossen, dessen Ausgang 28 an die Anode der Diode 17 und die Katode der Diode 18 gelegt ist.

Für die Voreinstellung auf den Betrieb mit maximaler Schwingungsfrequenz enthält der Scanner ein Mittel zur Regelung der Phasenverschiebung, wozu ein weitbekannter Mikroprozessor 29 (Fig. 2) benutzt wird, dessen Ausgänge 30 und 31 jeweils an die Steuereingänge 32, 33 der Einheit 21 angeschlossen sind.

Nach einer anderen Ausführungsvariante enthält der Scanner für technologische Laseranlagen zusätzlich einen Frequenzmesser 34 (Fig. 3), dessen Eingang 35 mit dem Ausgang 23 der Einheit 21 verbunden ist, und eine Sättigungspegelsteuereinheit 36, deren Eingang 37 mit einem Frequenzmesser 34 in Verbindung steht. Die Ausgänge 38 und 39 der Einheit 36 sind mit den entsprechenden Eingängen 40 und 41 der Einheit 24 verbunden.

Nach einer weiteren Ausführungsform enthält der Scanner für technologische Laseranlagen zusätzlich einen Generator 42 (Fig. 4) für periodische Signale, dessen Ausgang 43 mit dem Ausgang 26 der Einheit 24 im Verbindungspunkt 44 zusammengeschaltet und an den Verstärker 27 angeschlossen ist.

Nach einer Ausführungsform der Phasenschiebereinheit ist als solche ein Phasendreher 45 (Fig. 5) benutzt, der ein Subtraktionsmittel 46 enthält, an dessen Eingang 47 ein Differenziermittel 48 angeschlossen ist. Die Eingänge 49 und 50 der Mittel 46 und 48 sind im Verbindungspunkt 51 zusammengeschaltet und dienen als Eingang des Phasendrehers 45 sowie als Eingang 22 (Fig.1) der Einheit 21. An den Ausgang des Mittels 46 (Fig. 5) ist ein aperiodisches Glied 52 von erster Ordnung mit seinem Eingang 53 angeschlossen. Der Ausgang des Gliedes 52 dient als Ausgang des Phasendrehers 45 und als Ausgang 23 (Fig. 1) der Einheit 21.

Nach einer anderen Ausführungsvariante der Phasenschiebereinheit ist als solche ein Korrekturglied 54 (Fig. 6) benutzt, das zwei Additionsmittel 55, 56 enthält, an deren Eingänge 57, 58 jeweils die Differenziermittel 59, 60 angeschlossen sind. Die Eingänge 61 und 62 jeweils der Mittel 55, 59 sind zusammengeschaltet, dienen als Eingang des Gliedes 54 und bilden den Eingang 22 (Fig. 1) der Einheit 21. Die Eingänge 63 und 64 jeweils der Mittel 56 und 60 sind zusammengeschaltet und an das Mittel 55 angeschlossen. An das Mittel 55 ist der Eingang 65 des einen aperiodischen Gliedes 66 von erster Ordnung, an dessen Ausgang der Eingang 67 des anderen aperiodischen Gliedes 68 von erster Ordnung gelegt ist, angeschlossen. Der Ausgang des Gliedes 68 dient als Ausgang des Gliedes 54 und bildet den Ausgang 23 (Fig. 2, 1) der Einheit 21.

Gemäß einer weiteren Ausführungsvariante der Phasenschiebereinheit 21 ist als solche ein Filter 69 benutzt (Fig. 7), das eine Reihenschaltung aus Differenziermitteln 70 und 71 enthält. An den Ausgang des Mittels 71 ist ein Additionsmittel 72 mit seinem Eingang 73 gelegt. Die Eingänge 74 und 75 der Mittel 70 bzw. 72 sind in dem Verbindungspunkt 76 zusammengeschaltet, dienen als Eingang des Filters 69 und bilden den Eingang 22 (Fig. 1) der Einheit 21. An das Mittel 72 ist der Eingang 77 des einen aperiodischen Gliedes 78 von erster Ordnung gelegt, an dessen Ausgang der Eingang 79 des anderen aperiodischen Gleides 80 von erster Ordnung angeschlossen ist. Der Ausgang des Gliedes 80 dient als Ausgang des Filters 69 und bildet den Ausgang 23 (Fig. 1) der Einheit 21.

Gemäß einer weiteren Ausführungsvariante enthält die Phasenschiebereinheit 21 - in Reihe geschaltet - einen Phasendreher 45 (Fig. 8), dessen Eingang als Eingang 22 (Fig. 1) der Einheit 21 dient, und ein Korrekturglied 54 (Fig. 8), dessen Ausgang als Ausgang 23 (Fig. 1) der Einheit 21 dient.

Vorteilhafterweise kann die Phasenschiebereinheit 21- - in Reihe geschaltet - einen Phasendreher 45 (Fig. 9), dessen Eingang als Eingang 22 (Fig. 1) der Einheit 21 dient, und ein Filter 69 (Fig. 9) enthält, dessen Ausgang als Ausgang 23 (Fig. 1) der Einheit 21 dient.

Nach einer anderen Ausführungsvariante enthält die Phasenschiebereinheit 21 eine Reihenschaltung aus einem Korrekturglied 54 (Fig. 10), dessen Eingang als Eingang 22 (Fig. 1) der Einheit 21 dient, und einem Filter 69 (Fig. 10), dessen Ausgang als Ausgang 23 (Fig. 1) der Einheit 21 dient.

Gemäß einer weiteren Ausführungsvariante enthält die Phasenschiebereinheit 21 - in Reihe geschaltet - einen Phasendreher 45 (Fig. 11), dessen Eingang als Eingang 22 (Fig. 1) der Einheit 21 dient, ein Korrekturglied 54 (Fig. 11) und ein Filter 69, dessen Ausgang als Ausgang 23 (Fig. 1) der Einheit 21 dient.

In Fig. 12 ist eine Ausführungsvariante der Phasendrehereinheit 21 (Fig. 2, 3, 4) in Form eines Phasendrehers 45 (Fig. 5) gezeigt, bei dem das Mittel 48 und das Gleid 52 Steuereingänge haben, die als Steuereingänge 81 und 82 (Fig. 12) des Phasendrehers 45 dienen und die Steuereingänge 32 und 33 (Fig. 2, 3, 4) der Einheit 21 bilden.

In Fig. 13 ist eine Ausführungsvariante der Phasenschiebereinheit in Form eines Korrekturgliedes 54 (Fig. 6) gezeigt, bei der die Mittel 59 und 60 und die Glieder 66 und 68 Steuereingänge haben, die als Steuereingänge 83, 84, 85 und 86 (Fig. 13) des Gliedes 54 und folglich der Einheit 21 (nicht mitgezeichnet) dienen.

In Fig. 14 ist eine Ausführungsvariante der Phasenschiebereinheit in Form eines Filters 69 (Fig. 7) gezeigt, bei der die Mittel 70 und 71 und die Glieder 78 und 80 jeweils Steuereingänge haben, die als Steuereingänge 87, 88, 89 und 90 (Fig. 14) des Filters 69 und folglich der Einheit 21 (nicht mitgezeichnet) dienen.

In Fig. 15 ist eine Ausführungsvariante der Phasenschiebereinheit 21 gezeigt, die analog der Ausführung nach Fig. 8 ist, mit Ausnahme dessen, daß die Einheit 21 Steuereingänge hat, als welche die Eingänge 81 und 82 des Phasendrehers 45 und die Eingänge 83, 84, 85, 86 des Korrekturgliedes 54 dienen.

In Fig. 16 ist eine Ausführungsvariante der Phasenschiebereinheit 21 dargestellt, die analog der Ausführung gemäß Fig. 9 ist, mit Ausnahme dessen, daß die Einheit 21 Steuereingänge hat, als welche die Eingänge 81 und 82 des Phasendrehers 45 und die Eingänge 87, 88, 89 90 des Filters 69 dienen.

In Fig. 17 ist eine Ausführungsvariante der Phasenschiebereinheit 21 gezeigt, die analog der Ausführung gemäß Fig. 10 ist, mit Ausnahme dessen, daß die Einheit 21 Steuereingänge hat, als welche die Eingänge 83, 84, 85, 86 des Korrekturgliedes 54 und die Eingänge 87, 88, 89, 90 des Filters 69 dienen.

In Fig. 18 ist eine Ausführungsvariante der Phasenschiebereinheit 21 gezeigt, die analog der Ausführung nach Fig. 11 ist, mit Ausnahme dessen, daß die Einheit 21 Steuereingänge hat, als welche die Eingänge 81, 82 des Filters 45, die Eingänge 83, 84, 85 und 86 des Korrekturgliedes 54 und die Eingänge 87, 88, 89 und 90 des Filters 69 dienen.

- 11 -

Die Sättigungspegelsteuereinheit 36 (Fig. 3) enthält eine Divisionseinheit 91, deren einer Eingang als Eingang 37 der Einheit 36 dient, und an den anderen Eingang 92 eine Gleichspannungsquelle 93 angeschlossen ist. An den Ausgang der Einheit 91 sind die Eingänge 94 und 95 eines umkerenden bzw. eines nichtumkehrenden Verstärkers 96 bzw. 97 angeschlossen. Die Ausgänge der Verstärker 96 und 97 dienen jeweils als Ausgänge 38 und 39 der Einheit 36.

Die bekannte Sättigungseinheit 24 (Fig. 3) (V.A.Besekersky, E.P.Popov "Theorie für automatische Regelungssysteme", 1972, Moskau, Verlag "Nauka", S. 196) enthält einen Widerstand 98 (Fig. 20), dessen einer Anschluß als Eingang 25 der Einheit 24 dient, und dessen anderer Anschluß mit der Katode einer Diode 99, der Anode einer Diode 100, einem Anschluß des Widerstandes 101 und dem invertierenden Eingang 102 eines Operationsverstärkers 103 im Verbindungspunkt 104 verbunden ist. Der andere Eingang des Verstärkers 103 ist geerdet. Der andere Anschluß des Widerstandes 101, der Ausgang 105 des Verstärkers 103 und die einen Anschlüsse der veränderlichen Zwillingswiderstände 106 und 107 sind im Verbindungspunkt 108 zusammengeschaltet und dienen als Ausgang 26 der Einheit 24. Die anderen Anschlüsse der Widerstände 106 und 107 dienen als Steuereingänge 40 (Fig. 3) bzw.41 der Einheit 24. Die Stromabnehmer 109 und 110 der Widerstände 106 und 107 sind jeweils an die Katode der Diode 100 und an die Anode der Diode 99 angeschlossen.

Der Scanner für Laseranlagen gemäß Fig. 1, 21, 22 funktioniert folgenderweise.

Die Arbeitsweise des Scanners für technologische Laseranlagen besteht in der periodischen Ablenkung des Laserstrahlenbündels von einem technologischen Leistungslaser (nicht mitgezeichnet) durch den Spiegel 4. Das abgelenkte Strahlenbündel wird auf das zu behandelnde Werkstück gerichtet.

Die Winkelverstellung des Spiegels 4 wird von dem fotoelektrischen Geber 19 aufgenommen, in ein dem Drehwinkel des Spiegels 4 proportionales elektrisches Signal umgewandelt. Vom Ausgang 20 des Gebers 19 gelangt das Signal zum Eingang 22 der Phasenschiebereinheit 21. Die Einheit 21 bewirkt die vorgegebene Änderung des Signals in der Phase und übermittelt dieses von ihrem Ausgang 23 an den Eingang 25 der Sättigungseinheit 24.

Bei geringen Amplitudenwerten der Spannung $U < U_1$ (Fig. 21) am Eingang 25 (Fig. 1) der Einheit 24, was kennzeichnend für den Einschwingvorgang von mechanischen Schwingungen ist, nimmt die Spannung U am Ausgang 26 der Einheit 24 um das k-fache zu, wobei $k = tg \alpha$ und $\alpha$ (in Fig. 21 gezeigt) der Neigungswinkel der in Fig. 21 dargestellten Kurve U (u) ist.

Bei größeren Amplitudenwerten der Spannung $U > U_1$ bleibt der Amplitudenwert der Spannung U unverändert und ist gleich dem Sättigungspegel $U_1$ (in Fig. 21 gezeigt). Dann ist die Spannung am Ausgang 26 der Einheit 24 $U = U_1$ oder $U = -U_1$. Weiter gelangt das Signal vom Ausgang 26 der Einheit 24 zum Leistungsverstärker 27. Das in der Leistung verstärkte Signal gelangt von seinem Ausgang 28 zu den Elektromagneten 13 und 14 des Mittels 12 zur Erregung mechanischer Schwingungen und bringt den Schwinghebel 2 mit dem Spiegel 4 in Bewegung.

Somit findet bei dem Scanner eine Selbsterregung statt und der Scanner wird auf die stationäre optimale Abtastung des Spiegels 4 mit einer Frequenz $f_1$ (in Fig. 22 gezeigt) und einer Amplitude $a_1$ (in Fig. 22 gezeigt) der Winkelschwingungen, die dem Punkt 111 (in Fig. 22 gezeigt) der Amplitudenfrequenzlinie des Scanners entspricht, eingestellt. Bei diesem Betriebszustand führen die Schwankungen der verschiedenen Scannerparameter, wie zum Beispiel der Speisespannung der Elektromagnete 13,14, nicht zum Abriß des optimalen Betriebes auf einen schlaglosen harmonischen Betrieb mit einer Amplitude $a_2 (f_1)$, der dem Punkt 112 (in Fig. 22 gezeigt) entspricht.

Bei einer Umstellung des Scanners auf eine andere Abtastfrequenz kann bei erneuter Einstellung auf den optimalen Abtastbetrieb die Notwendigkeit einer Änderung des Phasenverschiebungswertes auftreten. Dazu treffen Signale von den Ausgängen 30 (Fig. 2) und 31 des Mikroprozessors 29 jeweils an den Steuereingängen 32 und 33 der Einheit 21 ein, infolgedessen in der Einheit 21 eine Änderung der Phasenverschiebung des Signals um den erforderlichen Wert stattfindet.

Der Scanner für technologische Laseranlagen gemäß Fig. 3, 19, 20, 21, 22 funktioniert wie folgt.

Im wesentlichen arbeitet der Scanner ähnlich dem oben beschriebenen, aber zur Gewinnung einer stabilen Abtastgeschwindigkeit ist es zweckmäßig, die Abtastfrequenz zu stabilisieren. Dazu wird der Signal vom Ausgang 23 der Einheit 21 gleichzeitig auf den Eingang 35 des Frequenzmessers 34 gegeben, in ein Signal umgesetzt, dessen Frequenz proportional der Schwingungsfrequenz des Spiegels 4 ist, und dann dem Eingang 37 der Sättigungspegelsteuereinheit zugeführt. Die Einheit 36 formiert Steuersignale, die von ihrem Ausgang 38 und 39 an den Steuerausgängen 40, 41 der Einheit 24 eintreffen. In der Einheit 24 wird ein positiver Sättigungspegel $U_1$ und ein negativer Sättigungspegel $-U_1$ der Einheit 24 formiert.

Die Formierung der Sättigungspegel $U_1$ und $-U_1$ geschieht folgenderweise.

Das am Eingang 25 (Fig. 20) der Einheit 24 eintreffende Signal gelangt über den Widerstand 98 zum invertierenden Eingang 102 des Operationsverstärkers 103. Dem gleichen Eingang 102 des Verstärkers 103 wird von seinem Ausgang 105 über den Widerstand 101 eine Gegenkopplungsspannung zugeführt. Bei Spannungsamplituden $U \quad U_1$ (Fig. 21) am Eingang 25 erzeugt der Strom im Kreis von dem Steuereingang 40 über die Widerstände 106, 107 zum Steuereingang 41 Potentiale an den Stromabnehmer 109, 110, die die Dioden 100 bzw. 99 sperren. Hier-

- 14 -

bei wird der Verstärkungsfaktor der Einheit 24 und die Spannung U an seinem Ausgang 26 durch die Widerstandswerte der Widerstände 98, 101 bestimmt. Bei einer Spannung $U > U_1$ am Eingang 25 der Einheit 24, d.h. beim Arbeiten der Einheit im Sättigungszustand, werden die Dioden 99, 100 geöffnet und bilden zusätzliche Rückkopplungen am Verstärker 103, die den Verstärkungsfaktor der Einheit 24 derart vermindern, daß die positiven und negativen Spannungspegel am Ausgang 26 gleich den Spannungspegeln $U_1$ bzw. $-U_1$ (Fig. 21) bleiben.

Die Steuerung der Sättigungspegel $U_1$ und $-U_1$ geschieht wie folgt.

Das Signal vom Frequenzmesser 34 wird dem einen Eingang der Divisionseinheit 91 zugeführt, an dem anderen Eingang 92 von welcher ein Signal von der Gleichspannungsquelle 93 eintrifft. Die Einheit 91 setzt diese Signale in ein Signal um, dessen Wert dem Verhältnis der Spannung an ihrem Eingang 92 zu einer Spannung, die am Eingang der Einheit 91 vom Frequenzmesser 34 eintrifft, gleich ist. Das erhaltene Signal gelangt von der Einheit 91 über die Eingänge 94 und 95 jeweils zu dem umkehrenden Verstärker 96 und dem nichtumkehrenden Verstärker 97, in welchen es nach der Größe geändert wird, wobei es in dem Verstärker 96 noch das Vorzeichen ändert. Von den Ausgängen der Verstärker 96 und 97 gelangt das Signal zu den Steuereingängen 40 und 41 der Einheit 24. Bei Schwankungen der Scannerparameter und Änderung der Abtastfrequenz werden die Potentiale an den Eingängen 40 und 41 geändert. Geändert werden auch die Potentiale an den Stromabnehmern 109 und 110 und die Sättigungspegel $U_1$, $-U_1$. Bei einer Abweichung der Frequenz bis auf die Werte $f_3$, $f_4$ (in Fig. 22 gezeigt), die den Punkten 113 und 114 (in Fig. 22 gezeigt) entsprechen, ändern sich die Sättigungspegel $U_1$, $-U_1$ jeweils auf die Werte $U_2$, $-U_2$ und $U_3$, $-U_3$ (in Fig. 22 gezeigt). Entsprechenderweise ändert sich die Abtastfrequenz, die

- 15 -

in der Größe der Sollfrequenz $f_1$ nahe wird.

Die Sollabtastgeschwindigkeit mit der entsprechenden Frequenz und Amplitude der Schwingungen wird im Verlaufe der Einstellung des Scanners durch Einstellung der Stromabnehmer 109, 110 der Widerstände 106, 107 in die nötige Lage gesichert.

Der Scanner für technologische Laseranlagen nach Fig. 4, 22 funktioniert folgenderweise.

Im wesentlichen ist die Arbeitsweise des Scanners der Arbeitsweise des Scanners gemäß Fig. 1 analog, aber das Signal vom Ausgang 26 der Einheit 24 wird mit dem mit der Sollabtastfrequenz veränderbaren Signal vom Ausgang 43 des Generators 42 für periodische Signale summiert. Hierbei erfolgen die Schwingungen des Spiegels 4 mit der vom Generator 42 vorgegebenen Frequenz, es wird also der für die harmonischen Schwingungen nahen Schwingungen weitbekannte Effekt der Mitnahme der Selbstschwingungsfrequenz durch die Frequenz der erzwingenden harmonischen Einwirkung realisiert. Zum Unterschied von dem weit bekannten Effekt entsteht der obererwähnte Effekt bei einer Bewegung nach dem Sägezahngesetz auf einer Frequenz $f_1$ (Fig. 22), die mehrmals größer als die Eigenfrequenz $f_5$ (Fig. 22) des aus dem Schwinghebel 2 mit dem Spiegel 4 und den Federn 11 bestehenden Selbstschwingungssystems ist.

Bei großen Sollphasenverschiebungen gelangt bei den Scannern für technologische Laseranlagen nach Fig. 1, 2, 3, 4 das Signal vom Geber 19 zu den Eingängen 50 und 49 (Fig. 5) des Differenziermittels 48 bzw. des Subtraktionsmittels 46 des Phasendrehers 45. Das Mittel 48 differenziert das Signal und ändert dieses nach dem Betrag entsprechend seiner Übertragungsfunktion $W(p) = Tp$, worin $p = d/dt$ der Differentiationsoperator und $T$ die Zeitkonstante des Mittels 48 ist. Von dem Mittel 48 wird das Signal auf den Eingang 47 des Mittels 46 gegeben, in dem es aus dem über den Eingang 49 eingetroffenen Signal substrahiert wird, und das resultierende

- 16 -

Signal von Ausgang 46 gelangt zum Eingang 53 des aperiodischen Gliedes 52 von erster Ordnung. Die Übertragungsfunktion des letzteren beträgt $W(p)=K_1(1+T_1p)$, wobei $K_1$ ein konstanter Faktor ist, während T die Zeitkonstante des Gliedes 52 ist und gleich T gesetzt wird, also $T_1 = T$. Das Glied 52 ändert das Signal in der Grösse und Phase und gibt es auf den Eingang 25 der Sättigungseinheit 24.

Bei einer Neueinstellung des Scanners, die früher für die Regelung der Phasenverschiebung beschrieben wurde, treffen die Signale von den Ausgängen 30 (Fig. 2, 3, 4) und 31 des Mikroprozessors 29 an den Eingängen 81 (Fig. 12), 82 des Phasendrehers 45, d.h. jeweils an den Steuereingängen des Mittels 48 und des Gliedes 52 ein und ändern die Zeitkonstanten der letzteren, infolgedessen eine Änderung der Phasenverschiebung um den nötigen Wert erfolgt.

Bei geringen Sollphasenverschiebungen und der Notwendigkeit einer Korrektur der Phasenverschiebungen in den Elektromagneten 13, 14, dem Geber 19, der Einheit 24 und dem Verstärker 27 bei verschiedenen Sollabtastfrequenzen trifft bei den Scannern für technologische Laseranlagen gemäß Fig. 1, 2, 3, 4 das Signal vom Geber 19 an den Eingängen 62 und 61 jeweils des Differenziermittels 59 und des Additionsmittels 55 des Korrekturgliedes 54 (Fig. 6) ein. Nach der Differenzierung durch das Differenziermittel 59 gelangt das Signal zum Eingang 57 des Mittels 55, wo es mit dem Signal vom Eingang 61 summiert wird und das resultierende Signale trifft an den Eingängen 64 und 63 jeweils des Differenziermittels 60 und des Summierungsmittels 56 ein. Nach der Differenzierung durch das Mittel 60 gelangt das Signal zum Eingang 58 des Mittels 56, in dem es mit dem Signal von dem Eingang 63 summiert wird und das resultierende Signal wird in der Amplitude und Phase durch die aperiodische Glieder 66 und 68 von erster Ordnung geändert. Vom Glied 68 wird das Signal auf den Eingang 25 der Sättigungseinheit 24 gegeben. Die Zeitkonstanten der Mittel 59 und 60 der Glieder 66 und 68 werden von verschiedener Größe gewählt, während deren Übertragungsfunktionen den obenbeschriebenen ähnlich sind.

Bei Neueinstellung des Scanners, die früher für die Regelung der Phasenverschiebung beschrieben wurde, treffen die Signale von den entsprechenden Ausgängen des Mikroprozessors 29 (nicht mitgezeichnet) an den Eingängen 83 (Fig. 13), 84, 85, 86 des Korrekturgliedes 59, d.h. jeweils an den Steuereingängen der Mittel 59 und 60 der Glieder 66, 68 ein und ändern die Zeitkonstanten der letzteren, infolgedessen eine Änderung der Phasenverschiebung um den erforderlichen Wert erfolgt.

Bei geringen Sollphasenverschiebungen und der Notwendigkeit, unerwünschte Arbeitsfrequenzbereiche der Scanner für technologische Laseranlagen gemäß Fig. 1, 2, 3, 4 auszuschließen, wird das Signal vom Geber 19 auf die Eingänge 74 und 75 des Differenziermittels 70 und des Additionsmittels 72 des Filters 69 (Fig. 7) gegeben. Die Mittel 70 und 71 differenzieren reihenfolglich zweimal das Signal und geben dieses auf den Eingang 73 des Mittels 72, in diesem wird es mit dem Signal vom Eingang 75 summiert, und das resultierende Signal wird auf den Eingang 77 des aperiodischen Gliedes 78 von erster Ordnung gegeben. Dieses Signal wird reihenfolglich in der Amplitude und Phase durch die aperiodischen Glieder 78 und 80 von erster Ordnung geändert und vom Glied 80 auf den Eingang 25 der Sättigungseinheit 24 gegeben. Die Zeitkonstanten der Mittel 70 und 71 wählt man von gleicher Größe und die der Glieder 78 und 80 unterschiedlich von den ersteren.

Bei der Neueinstellung des Scanners, die früher für die Regelung der Phasenverschiebung beschrieben wurde, gelangen die Signale von den entsprechenden Ausgängen des Mikroprozessors 29 (nicht mitgezeichnet) zu

- 18 -

den Eingängen 87 (Fig. 14), 88, 89, 90 des Filters 69, d.h. jeweils zu den Steuereingängen der Mittel 70, 71 und der Glieder 78, 80 und ändern die Zeitkonstanten derselben, so daß eine Änderung der Phasenverschiebung um den erforderlichen Wert stattfindet.

Nachstehend soll die Arbeitsweise bei verschiedenen Ausführungsformen der Phasenschiebereinheit 21 in den Scannern für technologische Laseranlagen gemäß Fig. 1, 2, 3, 4 bei verschiedenen Kombinationen der Anwendungsbedingungen des Phasendrehers 45 (Fig. 5 und 12), des Korrekturgliedes 54 (Fig. 6 und 13) und des Filters 69 (Fig. 7 und 14), deren Funktion oben beschrieben ist, betrachtet werden.

Das Signal wird über den Eingang 22 (Fig. 8) reihenfolglich dem Phasenschieber 45 und dem Korrekturglied 54 der Einheit 21 zugeführt. Letztere bewirkt die Phasenverschiebung des Signals unter Erfüllung der Bedingungen, die bei der Beschreibung der Funktion des Phasenschiebers 45 (Fig. 5, 12) und des Korrekturgliedes 54 (Fig. 6, 13) angegeben wurden. Die Regelung erfolgt über die Steuereingänge 81 (Fig. 15), 82, 83, 84, 85 und 86, auf welche die Signale von den entsprechenden Ausgängen (nicht mitgezeichnet) des Mikroprozessors 29 gegeben werden.

Das Signal gelangt über den Eingang 22 (Fig. 9) reihenfolglich zum Phasendreher 45 und zum Filter 69 der Einheit 21. Letztere bewirkt die Phasenverschiebung des Signals unter Erfüllung der Bedingungen, die oben bei der Beschreibung der Funktion des Phasenschiebers 45 (Fig. 5, 12) und des Filters (Fig. 7, 14) angegeben wurden. Die Regelung erfolgt über die Steuereingänge 81 (Fig. 16), 82, 87, 88, 89, 90, auf welche die Signale von den entsprechenden Ausgängen (nicht mitgezeichnet) des Mikroprozessors 29 gegeben werden.

Das Signal gelangt über den Eingang 22 (Fig. 10) reihenfolglich zum Korrekturglied 54 und zum Filter 69

- 19 -

der Einheit 21. Letztere bewirkt die Phasenverschiebung des Signals mit Erfüllung der Bedingungen, die oben bei der Beschreibung der Funktion des Gliedes 54 (Fig. 6, 13) und des Filters 69 (Fig. 7, 14) angegeben wurden. Die Regelung erfolgt über die Steuereingänge 83 (Fig. 17), 84, 85, 86, 87, 88, 89, 90, auf welche die Signale von den entsprechenden Ausgängen (nicht mitgezeichnet) des Mikroprozessors 29 gegeben werden.

Das Signal gelangt über den Eingang 22 (Fig. 11) reihenfolglich zu dem Phasenschieber 45, dem Korrekturglied 54 und dem Filter 69 der Einheit 21. Letztere bewirkt die Phasenverschiebung des Signals unter Erfüllung der Bedingungen, die oben bei der Beschreibung der Funktion des Phasendrehers 45 (Fig. 5, 12), des Gliedes 54 (Fig. 6, 13) und des Filters 69 (Fig. 7, 14) angegeben wurden. Die Regelung erfolgt über die Steuereingänge 81 (Fig. 18), 82, 83, 84, 85, 86, 87, 88, 89, 90, auf welche die Signale von den entsprechenden Ausgängen (nicht mitgezeichnet) des Mikroprozessors 29 gegeben werden.

Der Scanner für technologische Laseranlagen kann auch bei Benutzung von weit bekannten elektrodynamischen, magnetostriktiven, pneumatischen und hydraulischen Vibrationserregern als Mittel zur Erregung mechanischer Schwingungen realisiert werden.

Die vorliegende Erfindung gestattet es, einen optimalen Abtastbetrieb ohne Vergrößerung des Energieaufwandes zu realisieren.

Darüber hinaus schließt die vorliegende Erfindung die Teilnahme einer Bedienungsperson aus, was die Möglichkeit bietet, diese in automatisch umstellbaren Systemen zur Laserbehandlung in menschenarmen Betrieben zu benutzen.

Auch gestattet die vorliegende Erfindung den Abtastarbeitsfrequenzbereich sowohl in dem Gebiet der hohen, als auch der niedrigen Abtastfrequenzen sowie

- 20 -

den Abtastamplitudenbereich zu erweitern, was die Funktionsmöglichkeiten des Scanners verbessert.

Gewerbliche Anwendbarkeit

Die vorliegende Erfindung kann bei der Herstellung von verschleißfesten Präzisionsteilen und -baugruppen von Maschinen in verschiedenen Bereichen des Maschinenbaus, wie zum Beispiel in der Flugzeug-, Kraftfahrzeug-, Werkzeugmaschinenbauindustrie zum automatisierten Härten, Schweißen, Schneiden, zur Wärmebehandlung von Metalloberflächen benutzt werden.

Darüber hinaus kann die Erfindung in der auf dem Abtastprinzip beruhender Meßtechnik, darunter in Meßmitteln, die auf beweglichen Objekten angeordnet werden, benutzt werden.

- 21 -

PATENTANSPRÜCHE

1. Scanner für technologische Laseranlagen, der ein Gehäuse, in dem ein Abtastelement verschiebbar angeordnet ist, ein mit dem Gehäuse mechanisch verbundenes Mittel zur Anregung mechanischer Schwingungen des Abtastelementes, zumindest zwei Schlagpaare, jede von welchen zwei Elemente hat, das eine von welchen an dem Abtastelement und das andere im Gehäuse derart befestigt sind, daß sie bei Verstellung des Abtastelementes untereinander zusammenwirken können, enthält, dadurch g e k e n n z e i c h n e t, daß er zusätzlich einen Meßwandler (19), der die mechanischen Schwingungen des Abtastelementes (4) aufnimmt, eine Phasenschiebereinheit (21), deren Eingang (22) an den Meßwandler (19) angeschlossen ist, eine Sättigungseinheit (24), deren Eingang (25) an den Ausgang (23) der Phasenschiebereinheit (21) gelegt ist, und einen Leistungsverstärker (27), dessen Eingang an die Sättigungseinheit (24) und dessen Ausgang (28) an das Mittel (12) zur Anregung mechanischer Schwingungen des Abtastelementes (4) angeschlossen ist, enthält.

2. Scanner nach Anspruch 1, dadurch g e k e n n - z e i c h n e t, daß er zusätzlich einen an den Ausgang (23) der Phasenschiebereinheit (21) angeschlossenen Frequenzmesser (34) und eine mit diesem verbundene Sättigungspegelsteuereinheit (36) enthält, während die Sättigungseinheit (24) zumindest zwei Steuereingänge (40, 41) hat, an welche die entsprechenden Ausgänge (38, 39) der Sättigungspegelsteuereinheit (36) angeschlossen sind.

3. Scanner nach Anspruch 2, dadurch g e k e n n - z e i c h n e t, daß bei diesem die Sättigungspegelsteuereinheit (36) eine Divisionseinheit (91), bei welcher der eine Eingang als Eingang (37) der Sättigungspegelsteuereinheit (36) dient, und an den anderen Eingang (92)

eine Gleichspannungsquelle (93) angeschlossen ist, einen umkehrenden (96) und einen nichtumkehrenden (97) Gleichspannungsverstärker, deren Eingänge (94, 95) an die Divisionseinheit (91) gelegt sind, während der Ausgang jedes von diesen Verstärker als entsprechender Ausgang (40, 41) der Sättigungspegelsteuereinheit (36) dient, enthält.

4. Scanner nach Anspruch 1, dadurch g e k e n n - z e i c h n e t, daß er zusätzlich einen Generator (42) periodischer Signale enthält, dessen Ausgang (43) mit dem Ausgang (26) der Sättigungseinheit (24) zusammengeschaltet und an den Eingang des Leistungsverstärkers (27) angeschlossen ist.

5. Scanner nach jeden der Ansprüche 1, 2, 4, dadurch g e k e n n z e i c h n e t, daß bei diesem die Phasenschiebereinheit (21) einen Phasendreher (45) und/oder ein Korrekturglied (54) und/oder Filter (69) in angegebener Folge in Kombination oder einzeln enthält.

6. Scanner nach Anspruch 5, dadurch g e k e n n - z e i c h n e t, daß bei diesem die Phasenschiebereinheit (21) eine Reihenschaltung aus einem Phasendreher (45) und einem Korrekturglied (54) enthält.

7. Scanner nach Anspruch 5, dadurch g e k e n n - z e i c h n e t, daß bei diesem die Phasenschiebereinheit (21) einen Phasendreher (45) und ein mit diesem in Reihe geschaltetes Filter (69) enthält.

8. Scanner nach Anspruch 5, dadurch g e k e n n - z e i c h n e t, daß bei diesem die Phasenschiebereinheit (21) eine Reihenschaltung aus einem Korrekturglied (54) und einem Filter (69) enthält.

9. Scanner nach Anspruch 5, dadurch g e k e n n - z e i c h n e t, daß bei diesem die Phasenschiebereinheit (21) einen Phasendreher (45), ein Korrekturglied (54) und ein Filter (69), die in Reihe geschaltet sind, enthält.

10. Scanner nach jeden der Ansprüche 1 bis 4, dadurch g e k e n n z e i c h n e t, daß bei diesem die

- 23 -

Phasenschiebereinheit (21) zumindest zwei Steuereingänge (32, 33) zusätzlich hat, wobei der Scanner zusätzlich ein Mittel (29) zur Regelung der Phasenverschiebung, das Ausgänge (30, 31) nach der Zahl der Steuereingänge (32, 33) der Phasenschiebereinheit (21) hat, jeder von welchen an den entsprechenden Steuereingang (32, 33) der Phasenschiebereinheit (21) angeschlossen ist, enthält.

11. Scanner nach Ansprüchen 5 und 10, dadurch g e k e n n z e i c h n e t, daß bei diesem der Phasendreher (45) zwei Steuereingänge (81, 82) hat, jeder von welchen an den entsprechenden Ausgang des Mittels (29) zur Regelung der Phasenverschiebung angeschlossen ist.

12. Scanner nach Ansprüchen 5 und 10, dadurch g e k e n n z e i c h n e t, daß bei diesem das Korrekturglied (54) vier Steuereingänge (83, 84, 85 und 86) hat, jeder von welchen an den entsprechenden Ausgang des Mittels (29) zur Regelung der Phasenverschiebung angeschlossen ist.

13. Scanner nach Ansprüchen 5 und 10, dadurch g e k e n n z e i c h n e t, daß bei diesem das Filter (69) vier Steuereingänge (87, 88, 89 und 90) hat, jeder von welchen an den entsprechenden Ausgang des Mittels (29) zur Regelung der Phasenverschiebung angeschlossen ist.

14. Scanner nach Anspruch 10, dadurch g e k e n n z e i c h n e t, daß bei diesem als Mittel zur Regelung der Phasenverschiebung ein Mikroprozessor (29) benutzt ist.

FIG.1

FIG.2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 20

FIG. 19

FIG. 22

FIG. 21

**I. CLASSIFICATION OF SUBJECT MATTER** (if several classification symbols apply, indicate all) [6]

According to International Patent Classification (IPC) or to both National Classification and IPC

$IPC^4$    G 02 B 26/10

**II. FIELDS SEARCHED**

| Minimum Documentation Searched [7] | |
|---|---|
| Classification System | Classification Symbols |
| $IPC^4$ | G 02 B 26/10, H 01 S 3/101 |

| Documentation Searched other than Minimum Documentation to the Extent that such Documents are Included in the Fields Searched [8] |
|---|
| |

**III. DOCUMENTS CONSIDERED TO BE RELEVANT [9]**

| Category [*] | Citation of Document, [11] with indication, where appropriate, of the relevant passages [12] | Relevant to Claim No. [13] |
|---|---|---|
| A | GB, A, 2042763, (Tokyo Shibaura Denki Kabushiki Kaisha), 24 September 1980 (24.09.80), see fig. 1-8 | 1 |
| A | JP, B2, 59-11084, 13 March 1984 (13.02.84), see fig. 1-3 | 1-2 |
| A | JP, B2, 59-9882, 6 March 1984 (06.03.84), see fig. 1-3 | 1 |
| A | FR, A1, 2444288, (OFFICE NATIONAL D´ETUDES ET DE RECHERCHES AEROSPATIALES dit Q.N.E.R.A.), 11 July 1980 (11.07.80), see fig. 1-7 | 1 |
| A | FR, A1, 2527792, (FIAT AUTO SPA.), 2 December 1983 (02.12.83), see fig. 1,2 | 1 |
| A | US, A, 4139258, (The United States of America as represented by the Secretary of the Navy), 13 February 1979 (13.02.79), see page 1,fig.1 | 1-3 |
| A | US, A, 4163600, (Eli S. Jacobs), 7 August 1979 (07.08.79) | 1-3 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| 19 January 1986 (19.01.86) | 26 February 1987 (26.02.87) |
| International Searching Authority | Signature of Authorized Officer |
| ISA/SU | |

Form PCT/ISA/210 (second sheet) (January 1985)